# EUROPÄISCHE PATENTANMELDUNG

(11) **EP 3 031 606 A1**
(43) Veröffentlichungstag der Anmeldung: **15.06.2016**
(21) Anmeldenummer: 14197407.1
(22) Anmeldetag: 11.12.2014
(51) Int. Cl.: B32B 27/08, B32B 27/32

(54) **Oberflächenschutzfolie sowie Verwendung der Oberflächenschutzfolie zum temporären Schutz eines Gegenstandes während seiner Verarbeitung**

(71) Anmelder: Mondi Gronau GmbH, 48599 Gronau (DE)
(72) Erfinder: Widey, Frank, 48739 Legden (DE); Perick, Matthias, 48683 Ahaus-Alstätte (DE); Wigger, Matthias, 48599 Gronau (DE)
(74) Vertreter: Lorenz, Bernd Ingo Thaddeus

(57) **Zusammenfassung**

Die Erfindung betrifft eine Oberflächenschutzfolie mit einer ersten, für die Anordnung auf einem Gegenstand vorgesehenen Außenseite und einer zweiten Außenseite, umfassend zumindest eine erste Folienschicht, welche ein im nahen Infrarot absorbierendes Additiv und ein Titandioxid beinhaltenden Weißbatch aufweist. Erfindungsgemäß enthält die erste Folienschicht weniger als 0,05 Gew.-% Ruß und ist vorzugweise frei von Ruß, wobei die zweite Außenseite bei einem Messwinkel von 10° und einer CIE-Normbeleuchtung D65 einen Helligkeitswert L* von mehr als 85 aufweist. Die Erfindung betrifft auch die Verwendung der Oberflächenschutzfolie zum temporären Schutz eines Gegenstandes während seiner Verarbeitung.

## Beschreibung

Die vorliegende Erfindung betrifft eine Oberflächenschutzfolie mit einer ersten, für die Anordnung auf einem Gegenstand vorgesehenen Außenseite und einer zweiten Außenseite, umfassend zumindest eine erste Folienschicht, welche ein im nahen Infrarot absorbierendes Additiv und ein Titandioxid beinhaltenden Weißbatch aufweist.

Die Oberflächenschutzfolie ist insbesondere für einen temporären Schutz des Gegenstandes vorgesehen, um diesen beispielsweise bei seiner Verarbeitung zu schützen. Entsprechend betrifft die Erfindung auch die Verwendung der Oberflächenschutzfolie zum temporären Schutz eines Gegenstandes während seiner Verarbeitung.

Insbesondere soll die temporäre Oberflächenschutzfolie mit dem zu schützenden Gegenstand durch ein Laser geschnitten werden. Dabei muss die Oberflächenschutzfolie durch die eingesetzte Laserstrahlung scharf konturiert und sauber schneidbar sein.

In der Praxis werden häufig CO₂-Laser und Festkörperlaser eingesetzt. Zu den verbreiteten Festkörperlasern zählen Faserlaser, bei denen ein dotierter Kern einer Glasfaser das aktive Medium handelt, wobei der Faserlaser auch die Eigenschaften eines Lichtwellenleiters aufweist. Ein weiterer in der Praxis häufig genutzter Festkörperlaser ist der Nd:YAG-Laser.

Während der Kohlendioxidlaser (CO₂-Laser) Strahlung im mittleren Infrarotbereich mit einer Wellenlänge von 9,4 µm - 10,6 µm emittiert, emittieren die üblichen Festkörperlaser einschließlich der genannten Faserlaser und Nd:YAG-Laser Strahlung im nahen Infrarotbereich, insbesondere bei einer Wellenlänge von 1064 nm. Als naher Infrarotbereich wird in der Praxis der Wellenlängenbereich von 780 nm bis 3 µm bezeichnet, wobei für die beschriebenen Festkörperlaser im besonderen Maße der Spektralbereich IR-A mit einer Wellenlänge von 780 nm bis 1,4 µm (vgl. DIN 5031, Teil 7) relevant ist.

Übliche Polyolefine für Oberflächenschutzfolien sind im Bereich des nahen und mittleren Infrarots transparent.

Um eine Absorption im nahen und mittleren Infrarotbereich zu ermöglichen, werden dem Kunststoff Rußpartikel als Absorber zugegeben, wodurch die Folie wegen der Absorption durch den Ruß auch im sichtbaren Bereich schwarz oder bei der Zugabe eines Weißbatches zumindest grau ist.

Dies ist insofern nachteilhaft, weil im Hinblick auf ein Bedrucken der Oberflächenschutzfolie mit Hinweisen, Markierungen oder Werbung und hinsichtlich eines hochwertigen Erscheinungsbildes der Oberflächenschutzfolie die Einsatzmöglichkeiten beschränkt sind.

Um diese Nachteile zu verringern, sind mehrschichtige Oberflächenschutzfolien bekannt, welche durch eine Variation der Menge an Ruß und die Zugabe eines Weißbatches in Richtung des zu schützenden Gegenstandes dunkel und an der gegenüberliegenden Außenseite heller ausgeführt sind. So ist eine Oberflächenschutzfolie mit den Merkmalen des Oberbegriffes aus EP 2 679 332 A1 bekannt, wobei die auf dem Gegenstand zu platzierende Seite der Schutzfolie mit einem Haftklebstoff versehen ist. Gemäß sämtlichen Ausführungsbeispielen wird eine dreischichtige Folie auf der Basis von LDPE beschrieben, wobei eine erste zu dem Gegenstand gerichtete Folienschicht als im nahen Infrarot absorbierendes Additiv Ruß mit einem Gewichtsanteil von 1 Gew.-% aufweist. Des Weiteren ist eine Zwischenlage vorgesehen, welche zusätzlich zu Ruß als Absorber auch Titandioxid enthalten kann, während eine zweite Außenschicht Titandioxid mit einem erhöhten Anteil aufweist und vorzugsweise frei von Ruß ist. Obwohl die zweite Außenschicht Titandioxid enthält, weist die Oberflächenschutzfolie aufgrund der weiteren dunklen Lagen einen geringen Weißegrad auf.

Als Maß für die Helligkeit wird der von der CIE (Commission Internationale de L'eclairage - Internationale Beleuchtungskommission) entwickelte Farbraum-Standard L* a* b* bestimmt. Dieser auch als CIELAB bezeichnete Farbraum ist Gegenstand der DIN EN ISO 11664-4, welche die 2011 zurückgezogene DIN 6174 ersetzt. Die Bestimmung der Parameter L*, a* und b* kann mit üblichen Chromatometern erfolgen.

Gemäß der EP 2 679 332 A1 ist die erste Außenschicht in allen Ausführungsbeispielen dunkelgrau mit einem Helligkeitswert L* zwischen 22 und 27. Die zweite, bei der Applizierung auf einem zu schützenden Gegenstand außen liegende Außenschicht weist eine höhere Helligkeit L* zwischen 45 und 72 auf (siehe Tabellen 1 und 2). Das optische Erscheinungsbild ist aufgrund der dunkel eingefärbten Schichten verbesserungsbedürftig.

Der vorliegenden Erfindung liegt vor diesem Hintergrund die Aufgabe zugrunde, eine Oberflächenschutzfolie anzugeben, welche sowohl im nahen Infrarotbereich als auch im mittleren Infrarotbereich mit einem Laser geschnitten werden kann und verbesserte optische Eigenschaften im sichtbaren Bereich aufweist.

Ausgehend von einer Oberflächenschutzfolie mit den eingangs beschriebenen Merkmalen wird die Aufgabe erfindungsgemäß dadurch gelöst, dass die erste Folienschicht weniger als 0,05 Gew.-%, vorzugsweise weniger als 0,01 Gew.-% Ruß enthält und besonders bevorzugt frei von Ruß ist und dass die zweite Außenseite bei einem Messwinkel von 10° und einer CIE-Normbeleuchtung D65 einen Helligkeitswert L* von mehr als 85 aufweist.

Die vorliegende Erfindung bezieht sich insbesondere auf eine Oberflächenschutzfolie, welche keinen dunklen Schichten aufweist. Die Oberflächenschutzfolie kann grundsätzlich als Monofolie ausgeführt sein, wobei jedoch ein mehrschichtiger, insbesondere ein dreischichtiger Aufbau bevorzugt ist.

Vorzugsweise ist die Oberflächenschutzfolie nicht nur hell, sondern auch nicht wesentlich verfärbt. So ist gemäß einer bevorzugten Ausgestaltung der Erfindung vorgesehen, dass der Betrag der an der zweiten Außenseite bei einem Messwinkel von 10° und einer CIE-Normbeleuchtung D65 bestimmten Farbwerte a* und b* kleiner als 10, vorzugsweise kleiner als 5 und insbesondere kleiner als 2,5 ist.

Die Gesamtdicke der Oberflächenschutzfolie kann zwischen 40 µm und 150 µm, insbesondere zwischen 60 µm und 90 µm betragen.

Die Oberflächenschutzfolie kann an der ersten Außenseite für die Anordnung auf dem Gegenstand mit einer Beschichtung, beispielsweise einem Klebstoff versehen werden. Vorzugsweise ist die Oberflächenschutzfolie jedoch ohne eine solche Beschichtung mit einem Klebstoff ausgeführt und haftet alleine aufgrund der Oberflächenbeschaffenheit der ersten Außenseite, wozu diese beispielsweise besonders glatt und/oder mit einer Oberflächenbehandlung versehen sein kann.

Die erste Folienschicht kann als Hauptbestandteil Polyethylen, einschließlich einer Polyethylenmischung aufweisen. Der Anteil an Polyethylen in der ersten Folienschicht kann mehr als 70 Gew.-%, insbesondere zwischen 80 Gew.-% und 90 Gew.-% betragen, wobei abgesehen von dem absorbierenden Additiv und dem Weißbatch Polyethylen als einzige Polymerkomponente der ersten Folienschicht vorgesehen sein kann.

Wenn die Oberflächenschutzfolie gemäß einer bevorzugten Ausgestaltung mehrschichtig ausgeführt ist, können sämtliche Schichten in der beschriebenen Weise Polyethylen als Hauptbestandteil aufweisen.

Bei einem mehrschichtigen Aufbau ist vorzugsweise vorgesehen, dass zumindest eine zweite Folienschicht und gegebenenfalls weitere Folienschichten auch ein im nahen Infrarot absorbierendes Additiv und ein Titandioxid beinhalteten Weißbatch aufweisen, wobei die zweite Folienschicht und gegebenenfalls weitere Folienschichten weniger als 0,05 Gew.-%, insbesondere weniger als 0,01 Gew.-% Ruß enthalten und vorzugsweise frei von Ruß sind. Besonders bevorzugt ist die gesamte Oberflächenschutzfolie frei von Ruß, so dass auch durch ein Durchscheinen tiefer liegender Folienschichten keine Beeinträchtigung erfolgen kann.

Im Rahmen der Erfindung kann der Anteil von Titandioxid in der ersten Folienschicht und bei einer mehrschichtigen Ausgestaltung vorzugsweise in sämtlichen Folienschichten zwischen 3 Gew.-% und 12 Gew.-%, besonders bevorzugt zwischen 5 Gew.-% und 10 Gew.-% betragen. Durch den beschriebenen Anteil von Titandioxid kann eine effektive Weißfärbung erreicht werden.

Darüber hinaus hat sich anhand von orientierenden Versuchen überraschenderweise gezeigt, dass Titandioxid sich auch besonders vorteilhaft auf die Schneidbarkeit der Oberflächenschutzfolie mittels Laser auswirken kann, obwohl Titandioxid aufgrund der weißen Farbe nicht im nahen Infrarotbereich insbesondere in einem Bereich um 1064 nm absorbierend ist.

Es wird jedoch angenommen, dass die Titandioxid-Partikel üblicherweise senkrecht auftreffende Laserstrahlung in einem gewissen Maße brechen und ablenken können, wodurch dann hinsichtlich des im nahen Infrarot absorbierenden Additivs eine erhöhte Absorptionswahrscheinlichkeit resultiert.

In diesem Zusammenhang wird auch angenommen, dass die Größe und Größenverteilung der Titandioxid-Partikel in der Wechselwirkung mit dem absorbierenden Additiv von Bedeutung ist. So ist gemäß einer bevorzugten Ausgestaltung der Erfindung vorgesehen, dass in zumindest der ersten Folienschicht und bei einem mehrschichtigen Aufbau vorzugsweise in sämtlichen Folienschichten der auf die Gesamtmenge des in der jeweiligen Folienschicht enthaltenden Titandioxid bezogene Gewichtsanteil der Titanoxid-Partikel mit einer auf einen volumenäquivalenten Kugeldurchmesser normierten Größe zwischen 400 nm bis 700 nm mehr als 50 % beträgt. Die einzelnen Titandioxid-Partikel weisen dann zu einem großen Anteil eine Größe auf, die gemessen über eine Wellenlänge von 1064 nm in etwa der halben Wellenlänge entspricht und so im besonderen Maße eine Brechung des Laserstrahls bewirken kann.

Erfindungsgemäß wird eine besonders helle Folie bereitgestellt, welche vorzugsweise ausschließlich helle, im Wesentlichen weiße Folienschichten aufweist. Vor diesem Hintergrund ist ein im nahen Infrarot absorbierendes Additiv einzusetzen, welches im Gegensatz zu dem üblichen Additiv Ruß keine dunkle Einfärbung bewirkt. Vorzugsweise wird ein auch als Lasermasterbatch bezeichnetes Additiv eingesetzt, welches anorganische Partikel mit einem Anteil zwischen 1 Gew.-% bis 5 Gew.-%, besonders bevorzugt zwischen 1 Gew.-% und 3 Gew.-% enthält, wobei sich der genannte Gewichtsanteil auf das Gesamtgewicht der jeweils zugeordneten Folienschicht bezieht. Bei einer mehrschichtigen Folie sind vorzugsweise sämtliche Folienschichten mit der angegebenen Menge an anorganischen Partikeln als Bestandteil des absorbierenden Additivs versehen.

Geeignet als anorganische Partikel des im nahen Infrarot absorbierenden Additivs ist beispielsweise Glimmer, wobei die einzelnen Glimmer-Partikel mit Metalloxid beschichtet sein können.

Gemäß einem weiteren Aspekt der Erfindung kann vorgesehen sein, dass die gesamte Oberflächenschutzfolie aus Polyethylen, dem Titandioxid beinhaltenden Weißbatch und dem im nahen Infrarot absorbierenden Additiv, welches frei von Ruß ist, gebildet. Abgesehen von dem Weißbatch und dem Lasermasterbatch als absorbierendes Additiv liegt also dann eine sortenreine oder im Wesentlichen sortenreine Oberflächenschutzfolie vor, die auch gut recycelt werden kann. Wenn beispielsweise die Folie als Recyclat genutzt wird, wirken sich die funktionellen Bestandteile des Weißbatches und des Lasermasterbatches in der Regel nicht negativ aus. Wie üblich können noch Verarbeitungsmittel in der Oberflächenschutzfolie enthalten sein, wobei jedoch der Anteil in der Regel geringer als 2 Gew.-% ist.

Eine mehrschichtige Ausgestaltung der Oberflächenschutzfolie ist jedoch auch bei einer im Wesentlichen sortenreinen Ausgestaltung zweckmäßig, um für eine funktionelle Anpassung der Oberflächenschutzfolie verschiedene Polyethylen-Typen oder verschiedene Polyethylen-Mischungen für die verschiedenen Schichten einsetzen zu können. Für die beiden Außenschichten wird vorzugsweise Polyethylen niedriger Dichte (LDPE) eingesetzt. Für die Kernschicht kommt insbesondere eine Mischung verschiedener Polyethylen-Typen, beispielsweise von Polyethylen niedriger Dichte (LDPE) und linearem Polyethylen niedriger Dichte (LLDPE) in Betracht. Geeignet für die Kernschicht ist beispielsweise auch eine Mischung aus Polyethylen mittlerer Dichte (MDPE) mit einem mit Metallocen-Katalysatoren gewonnenen Polyethylen mittlerer Dichte (mMDPE).

Gegenstand der Erfindung ist auch die Verwendung der Oberflächenschutzfolie zum temporären Schutz eines Gegenstandes während seiner Verarbeitung, wobei die Oberflächenschutzfolie mit der ersten Seite auf zumindest einen Abschnitt des Gegenstandes aufgebracht wird, wobei nachfolgend die freiliegende zweite Außenseite der Oberflächenschutzfolie durch eine Laserstrahlung mit einer Wellenlänge im nahen oder mittleren Infrarot beaufschlagt wird und wobei durch die Laserstrahlung die Oberflächenschutzfolie und der darunter angeordnete Gegenstand geschnitten werden. Bei dem Gegenstand kann es sich um ein Schichtmaterial, insbesondere ein Metallblech, handeln.

Dadurch, dass die Oberflächenschutzfolie einen hohen Helligkeitswert L* von mehr als 85 aufweist, ergibt sich ein besonders hochwertiger Eindruck, wobei auch Aufdrucke, Markierungen oder dergleichen auf der zweiten Außenseite besonders gut zur Geltung kommen.

Durch die Laserstrahlung wird der Gegenstand üblicherweise mit Öffnungen und/oder mit einer äußeren Kontur versehen. Beispielsweise können Metallbleche in einer vorgegebenen Form zurechtgeschnitten werden, wobei dann die Oberflächenschutzfolie noch auf dem zu schützenden Gegenstand vorhanden ist und erst nachfolgend abgezogen wird. Da die Oberflächenschutzfolie präzise mit dem Laser geschnitten werden kann, ergibt sich auch eine scharfe, genaue Trennung, wodurch auch die Ränder des zu schützenden Gegenstandes an der Schnittlinie immer noch gut geschützt werden können.

Die Oberflächenschutzfolie wird üblicherweise durch Extrusion, bei einer mehrschichtigen Ausgestaltung durch Coextrusion hergestellt. Eine besonders glatte und anschmiegsame Oberfläche an zumindest einer der beiden Außenseiten kann durch eine Cast-Extrusion mit einer nachträglichen Glättung an einer gekühlten Walze und/oder einem Glättband erfolgen. Für die Herstellung der Oberflächenschutzfolie kommt jedoch auch eine Blasfolienextrusion bzw. -coextrusion in Betracht, wodurch sich in der Regel geringere Herstellungskosten ergeben. Die für die Anordnung auf dem Gegenstand vorgesehene erste Außenseite kann auch zur Verbesserung der Anhaftung mit einer Oberflächenbehandlung, einer Beschichtung oder Klebstoff versehen werden. Die Oberflächenschutzfolie ist üblicherweise so ausgeführt, dass diese auch nach dem Zuschneiden des geschützten Gegenstandes rückstandsfrei abgezogen werden kann, wobei gerade auch in diesem Zusammenhang Polyethylen als zähes Material besonders geeignet ist.

Im Rahmen der Erfindung geeignete, im nahen Infrarot absorbierende Additive, welche auch als Lasermasterbatch bezeichnet werden, werden beispielsweise von der Treffert GmbH & Co. KG aus D-55411 Bingen unter der Bezeichnung HT-MAB PE 91151 LSA und HT-MAB PE 91147 vertrieben. Die genannten Additive weisen einen Anteil von anorganischen Substanzen von etwa 40 % auf.

Im Rahmen von orientierenden Versuchen wurde als Titandioxid enthaltender Weißbatch "White PE MB 11989-I" von Ampacet eingesetzt.

Die Erfindung wird nachfolgend anhand von Beispielen erläutert.

Gemäß einem ersten Ausführungsbeispiel wird eine dreischichtige Folie mit einer Gesamtdicke von 75 µm und einem symmetrischen Schichtaufbau dreischichtig coextrudiert. Die beiden Außenschichten weisen jeweils eine Dicke von 22,5 µm auf und enthalten als polymere Grundsubstanz 82 Gew.-% eines Polyethylens niedriger Dichte (LDPE). Eine zwischen den Außenschichten angeordnete Kernschicht mit einer Dicke von 30 µm weist als polymere Grundsubstanz eine Mischung aus 45 % von mit Metallocen-Katalysatoren gewonnenen Polyethylen mittlerer Dichte (mMDPE) und 37 Gew.-% von Polyethylen mittlerer Dichte (MDPE) auf. Sämtliche Schichten enthalten 12 Gew.-% Weißbatch Ampercat White PE MB 11989-I und 6 Gew.-% Lasermasterbatch Treffert HAT-MB PE 911531 LSA.

Gemäß einem zweiten erfindungsgemäßen Ausführungsbeispiel ist der Anteil des Lasermasterbatches auf 3 Gew.-% verringert, wobei entsprechend der Anteil von LDPE in den Außenschichten erhöht ist. Als polymere Grundsubstanz der Kernschicht ist bei einer ansonsten gleichen Rezeptur 45 Gew.-% LDPE und 40 Gew.-% LLDPE vorgesehen.

Gemäß einem ersten Vergleichsbeispiel sind sämtliche Folienschichten aus 88 Gew.-% PE und 12 Gew.-% Weißbatch gebildet, wobei jedoch kein Lasermasterbatch enthalten ist. Gemäß einem zweiten Vergleichsbeispiel ist ausgehend von Polyethylen als Grundsubstanz für die drei Folienschichten mit einem Anteil von 97 Gew.-% in der jeder Folienschicht der genannte Lasermasterbatch mit einem Anteil von 3 Gew.-% enthalten.

Gemäß Tabelle 1 wird die Schneidbarkeit der verschiedenen Oberflächenschutzfolien mit einem Nd:YAG-Laser bei einer Wellenlänge von 1064 nm und mit einem CO₂-Laser bei einer Wellenlänge von 10,6 µm angegeben. Während sämtliche Folien mit einem CO₂-Laser gut geschnitten werden können, können nur die erfindungsgemäßen Folien gemäß Beispiel 1 und Beispiel 2 auch im nahen Infrarot bei einer Wellenlänge von 1064 nm gut bzw. sehr gut geschnitten werden, so dass nur diese Folien für einen universellen Einsatz geeignet sind.

**Tabelle 1**

| | Beispiel 1 | Beispiel 2 | Vergleichsbeispiel 1 | Vergleichsbeispiel 2 |
|---|---|---|---|---|
| Nd:YAG 1064 nm | + | ++ | - | - |
| CO₂ 10,6 µm | + | + | + | + |

Zum Vergleich der Helligkeitswerte der erfindungsgemäßen Oberflächenschutzfolien sind die beiden erfindungsgemäßen Oberflächenschutzfolien gemäß Beispiel 1 und Beispiel 2 bekannten Oberflächenschutzfolien gemäß dem Stand der Technik gegenübergestellt.

Vergleichsbeispiel 3 bezieht sich auf eine bekannte Oberflächenschutzfolie mit einer hellen Seite und einer dunklen Seite, wie sie auch aus der EP 2 679 332 A1 bekannt ist. Die Oberflächenschutzfolie weist eine erste Außenseite mit 90 % LDPE, 9 % eines Ruß enthaltenden Schwarzbatches und Rest Verarbeitungshilfsmittel auf. Die Schichtdicke der ersten Außenseite beträgt 27 µm. Eine weitere Folienschicht, welche eine Kernschicht bildet, ist aus 45 Gew.-% LDPE, 40 Gew.-% LLDPE und 15 Gew.-% Weißbatch gebildet. Die zweite bei der Benutzung sichtbare Außenseite ist aus 86,5 Gew.-% LDPE, 12,5 Gew.-% Weißbatch und Rest Verarbeitungshilfsmittel gebildet.

Vergleichsbeispiel 4 bezieht sich auf eine dreischichtig coextrudierte Oberflächenschutzfolie mit einer dunklen und einer hellen Seite, wobei die erste, für die Anordnung auf einen Gegenstand vorgesehene Außenseite aus 91 Gew.-% LDPE, 8 Gew.-% Schwarzbatch und 1 Gew.-% Verarbeitungshilfsmittel gebildet ist. Die Dicke beträgt 31,5 µm. Eine Kernschicht mit ebenfalls einer Dicke von 31,5 µm ist aus 40 Gew.-% LDPE, 40 Gew.-% LLDPE, 12 Gew.-% Weißbatch und 8 Gew.-% Schwarzbatch gebildet, wodurch diese Kernschicht durch die Zugabe von Ruß Laserstrahlung im nahen Infrarot absorbieren kann, durch die Zugabe von Weißbatch aber aufgehellt ist. Die zweite, bei der Benutzung sichtbare Außenseite mit einer Dicke von 24 µm ist aus 85 Gew.-% LDPE, 12 Gew.-% Weißbatch und Rest Verarbeitungshilfsmittel gebildet.

Das Vergleichsbeispiel 5 betrifft eine dreischichtige Oberflächenschutzfolie, welche kein Ruß als Bestandteil eines Schwarzbatches aufweist und auch im nahen Infrarot nicht mit Laserstrahlung geschnitten werden kann. Die erste, für die Anordnung auf einem Gegenstand vorgesehene Außenseite weist 91,5 Gew.-% LDPE, 6 Gew.-% Weißbatch und Rest Verarbeitungshilfsmittel auf, wobei die Dicke 33 µm beträgt. Eine Kernschicht mit einer Dicke von 30 µm ist aus 46 Gew.-% LDPE, 40 Gew.-% LLDPE, 13 Gew.-% Weißbatch und Rest Verarbeitungshilfsmittel bzw. UV-Stabilisatoren gebildet. Die zweite Außenseite enthält 95 Gew.-% LDPE, 4 Gew.-% Weißbatch und Rest Verarbeitungshilfsmittel.

In der Tabelle 2 sind die nach dem CIE 1976 L* a* b*-Farbraum bestimmten Helligkeits- und Farbwerte aufgeführt (vgl. DIN EN ISO 11664-4:2011-07), wobei die Bestimmung bei einem Messwinkel von 10° und einer CIE-Normbeleuchtung D65 erfolgte. Bei sämtlichen Ausführungen wurde eine weiße Unterlage für die Folie gewählt, um ein mögliches Durchscheinen zu berücksichtigen.

**Tabelle 2**

| | erste Außenseite | | | zweite Außenseite | | |
|---|---|---|---|---|---|---|
| | L* | a* | b* | L* | a* | b* |
| Beispiel 1 | 94,58 | 0,08 | 2,04 | 94,51 | 0,09 | 2,07 |
| Beispiel 2 | 95,60 | 0,22 | 1,46 | 95,55 | 0,23 | 1,47 |
| Vergleichsbeispiel 3 | 8,78 | -0,24 | 0,14 | 84,46 | -1,78 | -4,32 |
| Vergleichsbeispiel 4 | 8,42 | -0,24 | 0,04 | 76,24 | -2,3 | -6,31 |
| Vergleichsbeispiel 5 | 96,36 | 0,39 | 1,11 | 96,41 | 0,4 | 1,07 |

Die bekannten Oberflächenschutzfolien gemäß der Vergleichsbeispiele 3 und 4 sind an ihrer ersten Außenseite durch die Zugabe des Schwarzbatches dunkel und weisen einen Helligkeitswert L* von 8 bis 9 auf. Obwohl die an der zweiten Außenseite angeordnete zweite Außenschicht weiß ist, resultiert dort lediglich ein Helligkeitswert von etwa 84 bzw. 76.

Die Oberflächenschutzfolie gemäß Vergleichsbeispiel 5 weist an beiden Außenseiten einen hohen Helligkeitswert auf, kann jedoch nicht im nahen Infrarot mit einem Laser geschnitten werden.

Die erfindungsgemäßen Oberflächenschutzfolien gemäß Beispiel 1 und Beispiel 2 weisen an der zweiten Außenseite einen Helligkeitswert L* von mehr als 94 auf, wobei auch kein wesentlicher Farbstich vorliegt.

## Patentansprüche

1. Oberflächenschutzfolie mit einer ersten, für die Anordnung auf einem Gegenstand vorgesehenen Außenseite und einer zweiten Außenseite, umfassend zumindest eine erste Folienschicht, welche ein im nahen Infrarot absorbierendes Additiv und ein Titandioxid beinhaltenden Weißbatch aufweist, **dadurch gekennzeichnet, dass** die erste Folienschicht weniger als 0,05 Gew.-% Ruß enthält und vorzugweise frei von Ruß ist und dass die zweite Außenseite bei einem Messwinkel von 10° und einer CIE-Normbeleuchtung D65 einen Helligkeitswert L* von mehr als 85 aufweist.

2. Oberflächenschutzfolie nach Anspruch 1, **dadurch gekennzeichnet, dass** der Betrag der an der zweiten Außenseite bei einem Messwinkel von 10° und einer CIE-Normbeleuchtung D65 bestimmten Farbwerte a* und b* jeweils kleiner 5 ist.

3. Oberflächenschutzfolie nach Anspruch 1 oder 2, **dadurch gekennzeichnet, dass** die Gesamtdicke zwischen 40 µm und 150 µm beträgt.

4. Oberflächenschutzfolie nach einem der Ansprüche 1 bis 3, **dadurch gekennzeichnet, dass** die erste Folienschicht als Hauptbestandteil Polyethylen aufweist.

5. Oberflächenschutzfolie nach einem der Ansprüche 1 bis 4, **gekennzeichnet durch** einen mehrschichtigen Aufbau mit der ersten Folienschicht und zumindest einer zweiten Folienschicht, wobei auch die zweite Folienschicht ein im nahen Infrarot absorbierendes Additiv und ein Titandioxid (TiO₂) beinhaltenden Weißbatch aufweist, wobei die zweite Folienschicht weniger als 0,05 Gew.-% Ruß enthält und vorzugweise frei von Ruß ist.

6. Oberflächenschutzfolie nach einem der Ansprüche 1 bis 5, **gekennzeichnet durch** einen zumindest dreischichtigen Aufbau.

7. Oberflächenschutzfolie nach einem der Ansprüche 1 bis 6, **dadurch gekennzeichnet, dass** in zumindest einer der Folienschichten der Anteil an Titandioxid zwischen 3 Gew.-% und 12 Gew.-% beträgt.

8. Oberflächenschutzfolie nach einem der Ansprüche 1 bis 7, **dadurch gekennzeichnet, dass** in zumindest einer der Folienschichten der auf die Gesamtmenge des in der Folienschicht enthaltenen Titandioxid bezogene Gewichtsanteil der Titandioxid-Partikel mit einer auf einen volumenäquivalenten Kugeldurchmesser normierten Größe zwischen 400 nm bis 700 nm mehr als 50 % beträgt.

9. Oberflächenschutzfolie nach einem der Ansprüche 1 bis 8, **dadurch gekennzeichnet, dass** in zumindest der ersten Folienschicht anorganische Partikel mit einem Anteil zwischen 1 Gew.-% und 5 Gew.-% als Bestandteil des absorbierenden Additivs enthalten sind.

10. Oberflächenschutzfolie nach Anspruch 9, **dadurch gekennzeichnet, dass** als Partikel mit Metalloxid beschichteter Glimmer vorgesehen ist.

11. Oberflächenschutzfolie nach einem der Ansprüche 1 bis 10, **dadurch gekennzeichnet, dass** diese aus Polyethylen, dem Titandioxid beinhaltenden Weißbatch und dem im nahen Infrarot absorbierenden Additiv, welches frei von Ruß ist, gebildet ist.

12. Verwendung einer Oberflächenschutzfolie nach einem der Ansprüche 1 bis 11 zum temporären Schutz eines Gegenstandes während seiner Verarbeitung, wobei die Oberflächenschutzfolie mit der ersten Außenseite auf zumindest einen Abschnitt des Gegenstandes aufgebracht wird,
wobei nachfolgend die freiliegende zweite Außenseite der Oberflächenschutzfolie durch eine Laserstahlung mit einer Wellenlänge im nahen oder mittleren Infrarot beaufschlagt wird und
wobei durch die Laserstahlung die Oberflächenschutzfolie und der darunter angeordnete Gegenstand geschnitten werden.

13. Verwendung nach Anspruch 12, wobei der Gegenstand ein Schichtmaterial, insbesondere ein Metallblech ist.

14. Verwendung nach Anspruch 12 oder 13, wobei der Gegenstand durch die Laserstrahlung mit Öffnungen und/oder einer äußeren Kontur versehen wird.
